# EUROPEAN PATENT SPECIFICATION

(11) **EP 1 206 371 B1**
(45) Date of publication and mention of the grant of the patent: **09.07.2003**
(21) Application number: 00956358.6
(22) Date of filing: 31.07.2000
(51) Int. Cl.: B60R 1/068

(54) **CABLE OPERATED MIRROR CONTROL**
SPIEGEL MIT SEILZUGVERSTELLUNG
REGLAGE D'UN MIROIR COMMANDE PAR CABLE

(30) Priority: 10.08.1999 DE 19937761
(43) Date of publication of application: 22.05.2002
(73) Proprietor: Fico Cables, Lda., 4471 Maia (PT)
(72) Inventor: FERNANDES DE PINHO, Rui, Antonio, Cruz, P-4470 Maia (PT); MONTEIRO, José, Pereira, P-4470 Maia (PT)
(74) Representative: Hess, Peter K., Dipl.-Phys.
(86) International application number: EP0007382
(87) International publication number: WO01010678

(56) References cited:
- EP-A- 0 395 232
- US-A- 3 618 420

## Description

### 1. Technical Field:

The present invention relates to an apparatus for adjusting a mirror, in particular the outside rearview mirror of a motor vehicle.

### 2. Prior Art:

Usually motor vehicles are equipped with one or several outside rearview mirrors which are provided additionally to the rearview mirror arranged inside the passenger compartment, so that the driver can easier overview the traffic behind his own motor vehicle. Since the visual range provided by such an outside rearview mirror is determined on the one hand by the arrangement and adjustment of the mirror and on the other hand by the individually varying seating position and size of the driver, outside rearview mirrors according to the prior art typically comprise electrical or manual adjusting facilities to tilt the mirror for its adjustment about one or several axes. In case of a manual adjustment tilting movements of a control element arranged in the passenger compartment, for instance an adjusting lever, are transmitted to the suspension of the mirror, whereas in an electrical mechanism the movement is caused by electrical actuators (for example electromotors).

Sheathed cables often are used for transmitting the movements in manually adjustable mirrors. For tilting movements about two axes, which are necessary for the complete adjustment of the orientation of the mirror, at least three sheathed cables are necessary, if no spring-loaded restoring elements are provided. If the mirror is only to be tilted about one axis, two tension loaded sheathed cables are sufficient.

During assembly of the manually adjustable mirror in the motor vehicle a substantial amount of work together with the corresponding costs arises, when at first every single sheathed cable must be attached to the control element, and is subsequently threaded through a bore of the car body and finally connected with the suspension of the mirror. In the case of damage of the outside rearview mirror which can occur during use of the motor vehicle but also occasionally because of intentional demolition, this amount of work is again necessary for the subsequent repair.

The US 3,618,420 discloses a control apparatus according to the preamble of claim 1 with a mechanical remote control line. The control line is comprised of an elongated guide sheath of resiliently flexible lubric plastic material having a set of three guide holes extending in parallel lengthwise relation there-through and a set of three twisted strand flexible cables, one for each hole, lengthwise shiftably mounted in the sheath.

A similar construction is known from the EP 0 395 232. The remote control system described in this document also comprises three cables arranged in a common outer sheath. The outer sheath is formed of a plastics material and carries a static reference wire.

The present invention is therefore based on the problem to provide an apparatus for adjusting a mirror, in particular an outside rearview mirror of a motor vehicle, which can be installed with reduced amount of work in order to reduce the costs during production or repair of the motor vehicle.

### 3. Summary of the invention

The present invention relates to an apparatus for adjusting a mirror, in particular an outside rearview mirror of a motor vehicle with a control element for controlling tilting movements of the mirror, a tiltable suspension of the mirror and a transmitting element for transmitting the movements of the control element to the suspension of the mirror, wherein the transmitting element comprises at least two sheathed cables which are embedded into a common outer sheath.

In other words, according to the invention a controlling means for an outside rearview mirror is provided wherein the single sheathed cables are combined in a single component, the outer sheath. Thereby, the assembling of the outside rearview mirror is substantially facilitated, since only the pre-assembled outer sheath which is in addition stiffer and therefore easier to handle than the single sheathed cables, has to be threaded through the bore in the car body. Additionally, disturbing vibrations during driving because of relative movements of the single bowden cables are effectively prevented by embedding them into the outer sheath.

According to a first preferred embodiment the at least two sheathed cables are provided as separate bowden cables with seperate tubes which are embedded in the common outer sheath of the transmitting element. In this case, the pulling action transmitted by the respective sheathed cable to the suspension of the mirror is determined by the relative position with respect to the tube surrounding it, independently from the other sheathed cables.

Preferentially, the outer sheath is provided as an essentially homogeneous plastic rod which is made of polyacetal, in particular polyoxymethylene. This material has a high mechanical strength and a good temperature stability so that the mirror exactly maintains also under temperature variations the once adjusted position.

According to a further aspect of the present invention an apparatus for adjusting a mirror is provided, in particular an outside rearview mirror of a motor vehicle, with a control element for controlling the tilting movements of the mirror, a tiltable suspension of the mirror and a transmitting element for transmitting the movements of the control element to the suspension of the mirror, wherein the transmitting element comprises at least two sheathed cables the ends of which are integrally mounted on a common sheathed cable support. Therefore, the time-consuming separated threading of the single sheathed cables is not necessary during assembly. An embodiment is particularly preferred wherein the sheathed cable support is made of a zinc alloy shaped in diecasting or of a plastic material and wherein it is integrally connected to the ends of the at least two sheathed cables.

Additional advantageous further developments are subject matter of the dependant claims.

### 4. Short description of the drawing

In the following detailed description presently preferred embodiments of the present invention are described with reference to the drawing in which shows:
- Fig. 1:: a schematic view of the components of the apparatus according to the invention;
- Fig. 2:: a perspective view of the control element and the sheathed cables;
- Fig. 3a:: the arrangement according to the invention of the sheathed cables in the outer sheath according to a first preferred embodiment;
- Fig. 3b:: an arrangement similar to the prior art of the sheathed cables in the outer sheath which is not accomplished by the present invention;
- Fig. 3c:: an arrangement of the sheathed cables in the outer sheath which is not part of the invention.
- Fig. 3d:: an arrangement of the sheathed cables in the outer sheath which is not part of the invention.
- Fig. 4:: the sheathed cable support according to an especially preferred embodiment.

### 5. Detailed description of the invention

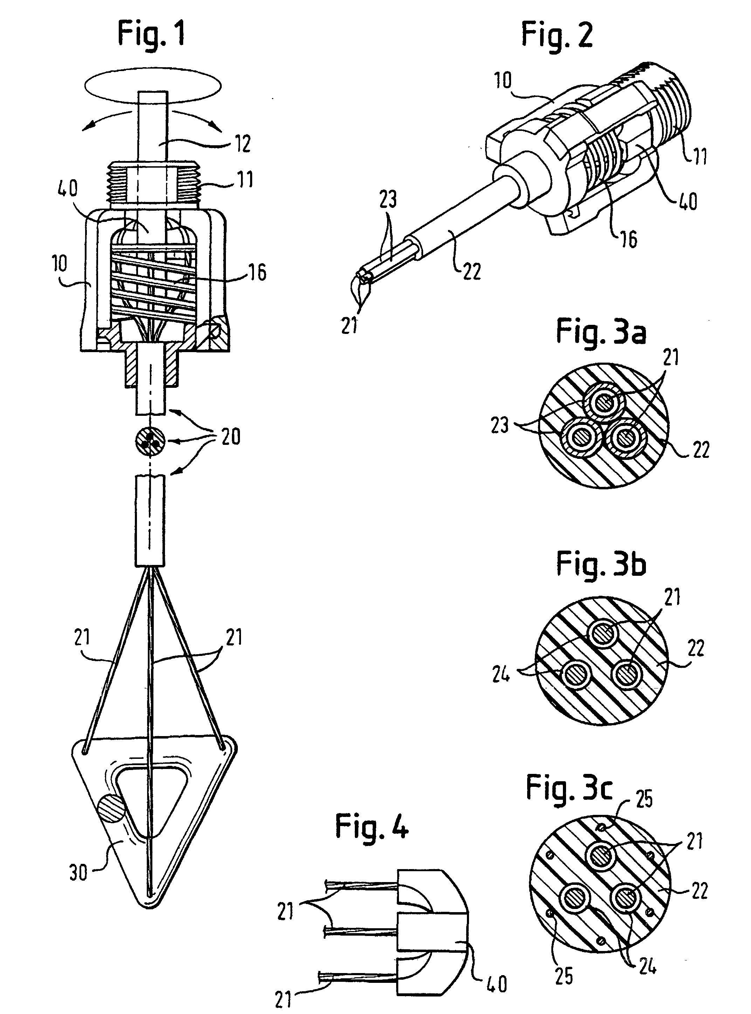

With reference to Fig. 1 the apparatus according to the invention for adjusting a mirror comprises a control lever 12, a transmitting element 20 and a suspension 30 to which the mirror (not shown) is mounted. In Fig. 1 the transmitting element 20 is shown in side-view as well as in cross-section. Fig. 2 shows a perspective view (without the suspension 30).

The control lever 12 is tiltably arranged in an attachment 10. As can be seen in Fig. 2, the attachment 10 is provided with threads 11 allowing the installation on the car frame (not shown). The control lever is only schematically shown in Fig. 1. Its exact shape is determined by the design of the passengers compartment.

When the control lever 12 is deflected from its vertical normal position (cf. arrows in Fig. 1), a sheathed cable support 40 which is attached to the lower end of the control lever 12 and to which preferably the ends of several sheathed cables 21 according to the invention are attached, slides in a bedding provided in the attachment 10.

This sliding movement of the sheathed cable support 40 leads to a displacement of the relative positions of the ends of the sheathed cables 21 whereby the orientation of the suspension 30 and therefore the adjustment of the mirror is changed. The suspension 30 is only schematically shown in Fig. 1 as a triangle-shaped frame. The combination of two axes as well as a ball socket bedding (not shown) or the like are possible for the bedding of the frame.

Alternatively to the described manual adjustment of the control lever 12 also an electrical adjustment is according to the invention possible. In this case the ends of the sheathed cables 21 are connected to the appropriate electromechanical actuating elements (for example electromotors, not shown).

In the shown preferred embodiment three sheathed cables are used. Although three sheathed cables are sufficient for a unambiguous determination of the orientation of the mirror, other numbers are also possible. If for example four sheathed cables are used, the movement about two different tilting directions are decoupled from each other with an appropriate attachment on the suspension 30.

The sheathed cable support 40 (cf. Fig. 4) is approximately bell-shaped. According to an especially preferred embodiment, the sheathed cable support 40 is already integrally connected to the ends of the sheathed cables 21 during production. Thereby the time-consuming threading of the ends of the sheathed cables 21 in the corresponding recesses of the sheathed cable support 40 during assembly is no longer necessary, which is necessary in the apparatus of the prior art.

Inside the attachment 10 for installing on the car frame a spiral spring 16 is arranged which presses the sheathed cable support 40 against the bedding. Thus, friction forces are generated which ensure that an once adjusted orientation of the mirror is maintained.

The transmitting element 20 according to the invention comprises besides the already mentioned sheathed cables 21 a single outer sheath 22 into which the three sheathed cables 21 are embedded. Each single sheathed cable 21 is arranged in a separate enveloping tube 23, as shown in detail in Fig. 3a, wherein the single enveloping tube - sheathed cable - combinations are preferably evenly distributed over the cross-section of the outer sheath 22. As indicated by the hatching, the outer sheath is preferably not hollow but preferentially a massive plastic component which encompasses integrally or positively the enveloping tubes 23. By the embedding into the outer sheath 22, the different sheathed cables 21 can be handled so that the assembling of the apparatus according to the invention in a motor vehicle is substantially facilitated.

According to an arrangement similar to the prior art which is not accomplished by the present invention and which is shown in Fig. 3b the three sheathed cables 21 do not extend in single tubes but directly in three separate channels 24 which are provided in the massive plastic material of the outer sheath 22. Thereby, not only the costs for the tubes 23 are saved but also the amount of work for assembly is further reduced.

For additionally stiffening the outer sheath 22 of the first embodiment of the invention and the arrangement similar to the prior art shown in Fig. 3b wire elements 25 can be integrated into the plastic material of the outer sheath 22 (confer Fig. 3c). Preferentially, these wire elements 25 are essentially orientated parallel to the longitudinal axis of the outer sheath 22. However, coil-like windings are also conceivable which extend along the circumference of the outer sheath 22. Altogether, however, the outer sheath shows a sufficient flexibility in all embodiments, so that it can be easily threaded through the opening in the side of the motor vehicle.

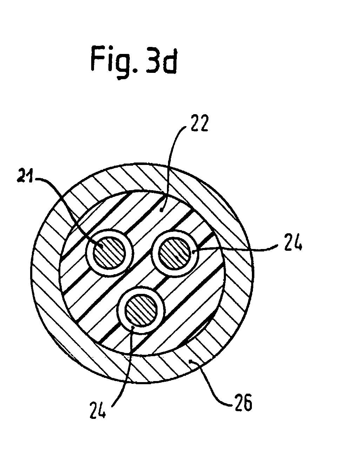

Another embodiment not part of the invention is shown in Fig. 3d. Similar to the version of Fig. 3c, the sheathed cables 21 are arranged in three separate channels 24 of the outer sheath 22 like the prior art. However, for an additional reinforcement of the overall construction, the outer sheath is encompassed by a conduit 26 consisting preferably of a suitable metal.

Plastic materials as well as metals can be considered as materials for the apparatus according to the invention.

The sheathed cables are preferably made of a stable steel cable. The sheathed cable support 40 which is subjected to particular loads is preferentially produced either by extrusion-coating the ends of the steel cables with a stable plastic material or by diecasting of a zinc alloy wherein the ends are preferably arranged in the diecasting mold before the casting cycle.

Preferably polyacetales, in particular polyoxymethylene (POM), are used for the tubes 23 and the outer sheath 22. These polymers which can, if needed, be mixed with other materials are featured among other things by a high strength, stiffness and toughness (also at low temperatures) as well as by a stability of shape and good heat resistance. Additionally, the good sliding properties of these materials are important for the present invention. Thereby, only a very low friction resistance is opposed to the movement of the sheathed cables in the tubes 23 so that an adjustment of the mirror is possible without jerk.

## Claims

1. Apparatus for adjusting a mirror, in particular the outside rearview mirror of a motor vehicle, comprising:
a. a control element (12) for controlling tilting movements of the mirror;
b. a tiltable suspension (30) of the mirror;
c. a transmitting element (20) for transmitting the movements of the control element (12) to the suspension (30) comprising at least two sheathed cables (21) **characterized in that**
d. the at least two sheathed cables (21) are provided as separate bowden cables arranged in separate enveloping tubes (23) embedded into a common outer sheath (22) of the transmitting element (20).

2. Apparatus according to claim 1, wherein the outer sheath (22) is provided as an essentially homogeneous flexible plastic rod.

3. Apparatus according to claim 2, wherein the outer sheath (22) is made of polyacetal, in particular polyoxymethylene.

4. Apparatus according to any of the preceding claims, wherein the outer sheath (22) is reinforced by additional embedded wire elements (25).

5. Apparatus according to claim 4, wherein the wire elements (25) extend essentially parallel to the outer sheath (22).

6. Apparatus according to any of the preceding claims, wherein the outer sheath (22) is encompassed by a further conduit (26).

7. Apparatus according to any of the preceding claims wherein the ends of the sheathed cables are integrally mounted to a common support (40).

8. Apparatus according to claim 7, wherein the sheathed cable support (40) is made of a diecasting zinc alloy or of a plastic material.

## Patentansprüche

1. Vorrichtung zum Ausrichten eines Spiegels, insbesondere des Außenspiegels eines Kraftfahrzeugs, aufweisend:
a. ein Steuerelement (12) zur Steuerung von Kippbewegungen des Spiegels;
b. eine verkippbar gelagerte Aufhängung (30) des Spiegels;
c. ein Übertragungselement (20), zur Übertragung der Bewegungen des Steuerelements (12) auf die Aufhängung (30) des Spiegels, das zumindest zwei Seilzüge (21) umfasst; **dadurch gekennzeichnet, dass**
d. die mindestens zwei Seilzüge (21) als separate Bowdenzüge bereitgestellt werden, welche in separaten Hüllschläuchen (23) angeordnet sind, die in eine gemeinsame Außenhülle (22) des Übertragungselements (20) eingebettet sind.

2. Vorrichtung nach Anspruch 1, wobei die Außenhülle (22) als ein im wesentlichen homogener flexibler Kunststoffstab ausgebildet ist.

3. Vorrichtung nach Anspruch 2, wobei die Außenhülle (22) aus einem Polyacetal, insbesondere Polyoxymethylen, besteht.

4. Vorrichtung nach einem der vorhergehenden Ansprüche, wobei die Außenhülle (22) durch zusätzliche eingebettete Drahtelemente (25) verstärkt ist.

5. Vorrichtung nach Anspruch 4, wobei sich die Drahtelemente (25) im wesentlichen parallel zur Außenhülle (22) erstrecken.

6. Vorrichtung nach einem der vorhergehenden Ansprüche, wobei die Außenhülle (22) von einem weiteren Rohr (26) umgeben ist.

7. Vorrichtung nach einem der vorhergehenden Ansprüche, wobei die Enden der Seinzüge integral in einem gemeinsamen Halter (40) befestigt sind.

8. Vorrichtung nach Anspruch 7, wobei der Seilzughalter (40)-aus-einer durch Druckguss geformten Zinklegierung oder aus einem Kunststoffmaterial besteht.

## Revendications

1. Dispositif pour ajuster un miroir, en particulier le rétroviseur extérieur d'un véhicule à moteur, comprenant :
a. un élément de commande (12) pour commander des mouvements de bascule du miroir ;
b. une suspension basculable (30) du miroir ;
c. un élément de transmission (20) pour transmettre les mouvements de l'élément de commande (12) à la suspension (30) comprenant au moins deux câbles gainés (21), **caractérisé en ce que**
d. les au moins deux câbles gainés (21) sont prévus comme câbles Bowden séparés configurés dans des tubes enveloppants distincts (23) emprisonnés dans un gaine externe commune (22) de l'élément de transmission.

2. Dispositif selon la revendication 1, dans lequel la gaine externe (22) est prévue comme une tige plastique flexible essentiellement homogène.

3. Dispositif selon la revendication 2, dans lequel la gaine externe (22) est réalisée en polyacétal, en particulier en polyoxyméthylène.

4. Dispositif selon l'une des revendications précédentes, dans lequel la gaine externe (22) est renforcée par des éléments emprisonnés additionnels en fil (25).

5. Dispositif selon la revendication 4, dans lequel les éléments en fil (25) s'étendent essentiellement parallèlement à la gaine externe (22).

6. Dispositif selon l'une des revendications précédentes, dans lequel la gaine externe (22) est délimitée par un autre conduit (26).

7. Dispositif selon l'une de revendications précédentes, dans lequel les extrémités des câbles gainés sont montées monobloc sur un support commun (40).

8. Dispositif selon la revendication 7, dans lequel le support de câbles gainés est réalisé en un alliage de zinc coulé sous pression ou en une matière plastique.
